# EUROPÄISCHE PATENTSCHRIFT

(11) **EP 1 508 718 B1**
(45) Veröffentlichungstag und Bekanntmachung des Hinweises auf die Patenterteilung: **18.11.2009**
(21) Anmeldenummer: 04019368.2
(22) Anmeldetag: 16.08.2004
(51) Int. Cl.: F16D 69/02, C04B 35/573

(54) **Kupplungsbeläge aus faserverstärkten keramischen Werkstoffen**
Clutch lining made of fiber- reinforced ceramic material
Garniture d'embrayage en matériau céramique renforcé par des fibres

(30) Priorität: 20.08.2003 DE 10338199
(43) Veröffentlichungstag der Anmeldung: 23.02.2005
(73) Patentinhaber: AUDI AG, 85045 Ingolstadt (DE)
(72) Erfinder: Kienzle, Andreas, Dr., 86753 Möttingen (OT Balgheim) (DE); Krupka, Mario, 86477 Adelsried (DE); Cabello, Gustavo, 86152 Augsburg (DE); Rosenlöcher, Jens, 86153 Augsburg (DE)
(74) Vertreter: Deckers, Hellmuth Alexander

(56) Entgegenhaltungen:
- EP-A- 1 188 947
- EP-A- 1 273 818
- EP-A- 1 319 640
- EP-A- 1 323 944
- DE-A- 19 727 585
- DE-C- 19 711 829

## Beschreibung

Die Erfindung betrifft Kupplungsbeläge aus faserverstärkten keramischen Werkstoffen.

Kupplungssysteme werden in Kraftfahrzeugen zur Trennung von Motor und Getriebe eingesetzt. In modernen Fahrzeugen werden fast ausschließlich Reibungskupplungen oder hydrodynamische Kupplungen verwendet. Bei der gebräuchlichen Reibungskupplung wird die kraftschlüssige Verbindung zwischen Motorwelle und Getriebeeingangswelle durch eine oder mehrere aufeinandergepreßte Scheiben hergestellt, wobei mindestens eine mit der Getriebeeingangswelle verbundene Kupplungsscheibe, die beiderseits Beläge trägt, zwischen der Schwungscheibe des Motors und einer Kupplungsdruckplatte angeordnet ist. Beim Treten des Kupplungspedals wird die Druckplatte entgegen der Federkraft der Tellerfeder von der Kupplungsscheibe weggedrückt, wodurch die Kupplungsscheibe freikommt. Die Verbindung zwischen Motor und Getriebe ist dadurch unterbrochen.

Die übertragbaren Drehmomente hängen von der Fläche und vom Durchmesser der Kupplungsscheibe sowie von der Federkraft der Tellerfeder ab. Für große Drehmomente werden daher Kupplungssysteme mit größerer Reibfläche oder auch Mehrscheibenkupplungen eingesetzt. Die Kupplungsscheibe unterliegt vor allem beim Anfahren einer Abnutzung durch Schleifen und erwärmt sich durch den Reibungsvorgang.

Gegenüber diesem Stand der Technik besteht die Aufgabe, Kupplungssysteme bereitzustellen, die bei geringen Einbaugrößen große Drehmomente übertragen können. Es werden Einscheibensysteme bevorzugt, die möglichst geringe Reibflächen aufweisen.

Reibpaarungen mit keramischen Werkstoffen, insbesondere faserverstärkten keramischen Werkstoffen sind bekannt. In der Anwendung als Bremsscheiben ist eine hohe Wärmebeständigkeit und ein vom Belastungszustand möglichst wenig abhängender Reibbeiwert gefordert. Für Kupplungssysteme werden hohe Haftreibung und hohe Torsionssteifigkeit gewünscht.

Aus der WO 93/11185 sind Kupplungsscheiben bekannt, die Reibflächen mit mehreren Lagen aufweisen, die abwechselnd Endlosfasern und Kurzfasern aus Kohlenstoff und jeweils Pech als Imprägnierungsmittel enthalten. Aus der EP 1 323 994 A1 sind Brems- und Kupplungsscheiben bekannt, deren Kernzone eine Fasermattenverstärkung aufweist. In der DE 197 11 829 C1 wird ein Verfahren beschrieben zur Herstellung von faserverstärkten Verbundkeramiken, bei dem ein mit Fasern aus Kohlenstoff verstärkter poröser Kohlenstoff-Körper mit Silicium infiltriert wird. Aus der EP 1 319 640 A2 ist ein Verfahren zum Oxidationsschutz für faserverstärkte Verbundwerkstoffe bekannt, bei dem der Werkstoff mit einer wäßrigen phosphathaltigen Lösung imprägniert wird. In der DE 30 24 200 wird ein Verfahren offenbart, bei dem einem Mischung von gehackten Fasern aus Kohlenstoff mit wasserlöslichen Verdickern geliert und als kontinuierliches Band extrudiert wird. Aus der WO-A 01/55611 sind in ein Ölbad eingebettete Mehrscheibenkupplungen bekannt, in denen Stahlscheiben belegt mit Geflechten aus Kohlenstoff-Endlosfasern mit Stahlscheiben zusammenwirken, deren Reibfläche mit einer dünnen Schicht aus Nickelpulver belegt ist.

Das Aufbringen von Kohlenstoff-Endlosfasern oder textilen Gebilden aus diesen erfordert erheblichen Aufwand. Darüberhinaus hat sich in den Versuchen, die der Erfindung zugrundeliegen, gezeigt, daß die durch die Verwendung von Endlosfasern aus Kohlenstoff oder der diese enthaltenden textilen Gebilde die Vorzugsorientierung der Fasern in der Ebene der daraus hergestellten Beläge zur Erzielung einer hohen Haftreibung ungünstiger ist. Daher sind Beläge für Kupplungsscheiben erwünscht, die mit geringerem Aufwand zu fertigen sind, und die hohe Haftreibungswerte ergeben.

Aus der DE-A 199 39 545 sind Kupplungsscheiben bekannt, die mit Reibbelägen ausgerüstet sind enthaltend mit Fasern aus Kohlenstoff verstärktes Siliciumcarbid. Dabei kann auch vorgesehen sein, daß die mit den Belägen eine Reibpaarung bildenden Teile Schwungscheibe und Druckplatte aus mit Fasern aus Kohlenstoff verstärktem Siliciumcarbid ausgeführt sind. Über die Art des verwendeten Werkstoffs wird darüber hinaus keine Aussage gemacht.

Gegenüber diesem Stand der Technik gilt es sicherzustellen, daß eine ausreichende Haftreibung erreicht wird.

Die Aufgabe wird gelöst durch Kupplungsbeläge aus faserverstärkten keramischen Werkstoffen, die Kohlenstoff-Kuirzfasern enthalten, und deren Matrix einen Massenanteil von mindestens 40 % Siliciumcarbid aufweist, erhältlich durch Füllen von in dem Werkstoff nach der Infiltration mit Silicium enthaltenen Poren mit Schmelzen von Metallen ausgewählt aus Aluminium, Eisen, Chrom, Nickel, Kupfer, Molybdän, Wolfram, Vanadium, Niob, Tantal, Titan und Zirkon sowie den Legierungen Messing und Bronze.

Die Beläge aus faserverstärkten keramischen Werkstoffen werden bevorzugt auf einem Träger aus Metall oder faserverstärkter Keramik befestigt. Dabei kann die Befestigung durch Kleben, Schrauben, Nieten oder durch andere geeignete Verbindungstechniken erfolgen.

Die Erfindung betrifft daher auch Kupplungsscheiben umfassend einen Träger aus Metall oder aus einem faserverstärkten Keramik-Werkstoff, die mit Belägen aus faserverstärkten keramischen Werkstoffen versehen sind, die Kohlenstoff-Kurzfasem enthalten, und deren Matrix einen Massenanteil von mindestens 40 % Siliciumcarbid aufweist.

Bevorzugt enthält die Matrix der faserverstärkten keramischen Werkstoffe 60 % bis 90 % an Siliciumcarbid, 0 % bis 30 % an elementarem Silicium und 0 % bis 10 % an elementarem Kohlenstoff. Der Massenanteil der Kohlenstoff-Kurzfasem in dem keramischen Werkstoff beträgt bevorzugt 20 % bis 60 %, besonders bevorzugt 25 % bis 50 %, und insbesondere 30 % bis 35 %.

Die gewichtsmittlere Länge der Kurzfasern aus Kohlenstoff ist bevorzugt 0,001 mm bis 30 mm, besonders bevorzugt 0,1 mm bis 15 mm und insbesondere 0,2 mm bis 5 mm. Ihr Durchmesser beträgt 4 µm bis 12 µm, bevorzugt 5 µm bis 10 µm, und insbesondere 6 µm bis 8 µm.

Die Beläge aus dem faserverstärkten keramischen Werkstoff sind bevorzugt 2 mm bis 6 mm dick und haben die Form von abgerundeten Rechtecken, abgerundeten Trapezen oder Kreisringsegmenten, wobei das Maß in Richtung des Kupplungsscheibenradius bevorzugt 10 mm bis 30 mm und das in Umfangsrichtung bevorzugt 10 mm bis 90 mm beträgt. Es ist bevorzugt, mindestens 2, bevorzugt mindestens 3 und besonders bevorzugt mindestens 4 dieser Beläge symmetrisch über den Umfang der Kupplungsscheibe anzuordnen.

Es ist besonders bevorzugt, die Länge der Fasern so zu wählen, daß der Mittelwert der Projektion ihrer Länge auf die Normale der größten Fläche der Kupplungsbeläge 10 % bis 95 %, bevorzugt 20 % bis 90 %, und besonders bevorzugt 30 % bis 85 % der Dicke der Beläge beträgt.

Die Werkstoffe für die Beläge lassen sich herstellen durch ein mehrstufiges Verfahren, bei dem
- im ersten Schritt Kohlenstoff-Kurzfasem mit carbonisierbaren durch Erwärmen erweichenden Stoffen (nachfolgend als "Binder" bezeichnet) vermischt werden, diese Mischungen
- im zweiten Schritt unter Anwendung von Druck und Temperatur zu Körpern verpreßt werden, die in ihren Abmessungen den gewünschten Belägen entsprechen,
- die Preßkörper im dritten Schritt durch Erwärmen unter Ausschluß von oxydierenden Agenzien und unter Erhalt ihrer Form in poröse, von Kohlenstoff-Kurzfasern durchsetzte Kohlenstoffkörper überführt werden, die
- im vierten Schritt mit einer Silicium enthaltenden Schmelze unter vermindertem Druck in Kontakt gebracht werden, wobei die Schmelze in den porösen Körper eindringt und dessen Poren füllt, wobei sich zumindest teilweise der Kohlenstoff mit dem Silicium zu Siliciumcarbid umsetzt, und wobei die Menge der Schmelze so gewählt wird, daß die Poren nicht vollständig mit der Silicium enthaltenden Schmelze gefüllt werden, und
- Füllen der restlichen zugänglichen Poren mit einer weiteren Schmelze, die eine Schmelztemperatur vom mindestens 550 °C aufweist, ausgewählt aus Metallen wie Aluminium, Eisen, Chrom, Nickel, Kupfer, Molybdän, Wolfram, Vanadium, Niob, Tantal, Titan und Zirkon und insbesondere auch Legierungen wie Messing und Bronze.

Bevorzugt beträgt der Massenanteil dieser Metalle in der Matrix 2 % bis 20 %.

Soweit zum Anbringen der Beläge auf der Kupplungsscheibe Montagelöcher erforderlich sind, lassen sich diese mit Vorteil in die porösen Kohlenstoffkörper einbringen, die im dritten Schritt erhalten werden.

Eine bevorzugte Herstellungsvariante für die erfindungsgemäßen Werkstoffe nutzt ein kontinuierliches Verfahren, bei dem in einem Mischer die Mischung aus den Kurzfasern und dem Binder hergestellt wird, die in eine kontinuierliche Schneckenpresse (Extruder) gefüllt und durch ein Mundstück gepreßt wird, das der Kontur der gewünschten Beläge entspricht. Der Strang wird dann zerteilt, die erhaltenen Rohlinge werden wie oben beschrieben carbonisiert und mit der Silicium enthaltenden Schmelze behandelt. Durch diese Art der Herstellung erhalten die Kohlenstoff-Kurzfasern eine Vorzugsorientierung senkrecht zur Reibfläche der Beläge, dies hat sich auf die Höhe der Haftreibung besonders günstig ausgewirkt.

## Patentansprüche

1. Kupplungsbeläge aus faserverstärkten keramischen Werkstoffen, die Kohlenstoff-Kurzfasern enthalten, und deren Matrix einen Massenanteil von mindestens 40 % Siliciumcarbid aufweist, erhältlich durch ein Verfahren, bei dem
- im ersten Schritt Kohlenstoff-Kurzfasern mit carbonisierbaren durch Erwärmen erweichenden Stoffen vermischt werden, diese Mischungen
- im zweiten Schritt unter Anwendung von Druck und Temperatur zu Körpern verpreßt werden, die in ihren Abmessungen den gewünschten Belägen entsprechen,
- die Preßkörper im dritten Schritt durch Erwärmen unter Ausschluß von oxydierenden Agenzien und unter Erhalt ihrer Form in poröse, von Kohlenstoff-Kurzfasern durchsetzte Kohlenstoffkörper überführt werden, die
- im vierten Schritt mit einer Silicium enthaltenden Schmelze unter vermindertem Druck in Kontakt gebracht werden, wobei die Schmelze in den porösen Körper eindringt und dessen Poren füllt, wobei sich zumindest teilweise der Kohlenstoff mit dem Silicium zu Siliciumcarbid umsetzt,
**dadurch gekennzeichnet, daß** im vierten Schritt die Menge der Schmelze so gewählt wird, daß die Poren nicht vollständig mit der Silicium enthaltenden Schmelze gefüllt werden, und
- die restlichen zugänglichen Poren mit einer weiteren Schmelze gefüllt werden, die eine Schmelztemperatur vom mindestens 550 °C aufweist, ausgewählt aus Schmelzen von den Metallen Aluminum, Eisen, Chrom, Nickel, Kupfer, Molybdän, Wolfram, Vanadium, Niob, Tantal, Titan und Zirkon sowie den Legierungen Messing und Bronze.

2. Kupplungsbeläge nach Anspruch 1, **dadurch gekennzeichnet, daß** die Matrix der faserverstärkten keramischen Werkstoffe 60 % bis 90 % an Siliciumcarbid, 0 % bis 30 % an elementarem Silicium und 0 % bis 10 % an elementarem Kohlenstoff enthält.

3. Kupplungsbeläge nach Anspruch 1, **dadurch gekennzeichnet, daß** die Matrix der faserverstärkten keramischen Werkstoffe einen Massenanteil von 2 % bis 20 % der genannten Metalle enthält.

4. Kupplungsbeläge nach Anspruch 1, **dadurch gekennzeichnet, daß** der Massenanteil der Kohlenstoff-Kurzfasern in dem keramischen Werkstoff 20 % bis 60 % beträgt.

5. Kupplungsbeläge nach Anspruch 1, **dadurch gekennzeichnet, daß** die gewichtsmittlere Länge der Kurzfasern aus Kohlenstoff 0,001 mm bis 30 mm und ihr Durchmesser 4 µm bis 12 µm beträgt.

6. Verfahren zur Herstellung von Kupplungsbelägen nach Anspruch 1, wobei in einem Mischer eine Mischung aus Kohlenstoff Kurzfasern und einem Binder hergestellt wird, die in eine kontinuierliche Schneckenpresse gefüllt und durch ein Mundstück gepreßt wird, das der Kontur der gewünschten Beläge entspricht, der Strang dann zerteilt wird, die erhaltenen Rohlinge carbonisiert und mit einer Silicium enthaltenden Schmelze behandelt werden, wobei mindestens ein Teil des bei dem Carbonisieren entstandenen Kohlenstoffs mit dem Silicium zu Siliciumcarbid umgesetzt wird, **dadurch gekennzeichnet, daß** die Poren nicht vollständig mit der Silicium enthaltenden Schmelze gefüllt werden, und die restlichen zugänglichen Poren mit einer weiteren Schmelze von Metallen gefüllt werden ausgewählt aus Aluminium, Eisen, Chrom, Nickel, Kupfer, Molybdän, Wolfram, Vanadium, Niob, Tantal, Titan und Zirkon sowie den Legierungen Messing und Bronze.

7. Verfahren nach Anspruch 6, **dadurch gekennzeichnet, daß** die Metalle in einer Menge eingesetzt werden, daß ihr Massenanteil in der Matrix 2 % bis 20 % beträgt.

8. Verfahren nach Anspruch 6, **dadurch gekennzeichnet, daß** es als kontinuierliches Verfahren durchgeführt wird, bei dem in einem Mischer die Mischung aus den Kurzfasern und dem Binder hergestellt wird, die in eine kontinuierliche Schneckenpresse gefüllt und durch ein Mundstück gepreßt wird, das der Kontur der gewünschten Beläge entspricht, der Strang dann zerteilt und die erhaltenen Rohlinge carbonisiert und anschließend zunächst mit der Silizium enthaltenden Schmelze infiltriert wird, und danach die restlichen zugänglichen Poren mit einer weiteren Schmelze der genannten Metalle gefüllt werden, wodurch die Kohlenstoff-Kurzfasern eine Vorzugsorientierung senkrecht zur Reibfläche der Beläge erhalten.

9. Kupplungsscheiben umfassend einen Träger aus Metall oder aus einem faserverstärkten Keramik-Werkstoff, der mit Belägen gemäß Anspruch 1 versehen ist.

10. Kupplungssysteme enthaltend mindestens eine Kupplungsscheibe nach Anspruch 9.

## Claims

1. A clutch lining comprising fiber-reinforced ceramic materials which contain short carbon fibers and whose matrix has a mass fraction of at least 40 % of silicon carbide which can be obtained by a process in which
- in the first step, short carbon fibers are mixed with carbonizable materials which soften on heating, these mixtures are
- in the second step, pressed with application of pressure and heat to form bodies whose dimensions correspond to the desired linings,
- the pressed bodies are, in the third step, converted into porous carbon bodies permeated by short carbon fibers with retention of their shape by heating in the absence of oxidizing agents, and
- in the fourth step, these carbon bodies are brought into contact with a silicon-containing melt under reduced pressure, so that the melt penetrates into the porous body and fills its pores, with at least part of the carbon reacting with the silicon to form silicon carbide,
wherein the amount of melt in the fourth step is chosen so that the pores are not completely filled with the silicon-containing melt and
- the remaining accessible pores are filled with a further melt which has a melting point of at least 550°C and is selected from among melts of the metals aluminum, iron, chromium, nickel, copper, molybdenum, tungsten, vanadium, niobium, tantalum, titanium and zirconium, and also the alloys brass and bronze.

2. The clutch lining as claimed in claim 1, wherein the matrix of the fiber-reinforced ceramic materials comprises from 60 % to 90 % of silicon carbide, from 0 % to 30 % of elemental silicon and from 0 % to 10 % of elemental carbon.

3. The clutch lining as claimed in claim 1, wherein the matrix of the fiber-reinforced ceramic materials comprises a mass fraction of from 2% to 20% of the stated metals.

4. The clutch lining as claimed in claim 1, wherein the mass fraction of the short carbon fibers in the ceramic material is from 20 % to 60 %.

5. The clutch lining as claimed in claim 1, wherein the weight average length of the short carbon fibers is from 0.001 mm to 30 mm and their diameter is from 4 µm to 12 µm.

6. A process for producing clutch linings as claimed in claim 1, which comprises producing a mixture of short carbon fibers and a binder in a mixer, introducing the mixture into a continuous screw extruder and extruding it through a die which corresponds to the shape of the desired linings, then cutting up the extrudate and carbonizing the blanks obtained and treating them with a silicon-containing melt, with at least part of the carbon formed in the carbonization reacting with the silicon to form silicon carbide wherein the pores are not completely filled with the silicon-containing melt and the remaining accessible pores are filled with a further melt of metals selected from among aluminum, iron, chromium, nickel, copper, molybdenum, tungsten, vanadium, niobium, tantalum, titanium and zirconium and also the alloys brass and bronze.

7. The process as claimed in claim 6, wherein the metals are used in such an amount that their mass fraction in the matrix is from 2% to 20%.

8. The process as claimed in claim 6, which is carried out as a continuous process in which the mixture of the short fibers and the binder is produced in a mixer and is introduced into a continuous screw extruder and extruded through a die which corresponds to the shape of the desired linings, the extrudate is then cut up and the blanks obtained are carbonized and subsequently firstly infiltrated with the silicon-containing melt and the remaining accessible pores are then filled with a further melt of the stated metals, as a result of which the preferential orientation of the short carbon fibers is perpendicular to the friction surface of the linings.

9. A clutch disk comprising a carrier made of metal or a fiber-reinforced ceramic material which is provided with linings as claimed in claim 1.

10. A clutch system comprising at least one clutch disk as claimed in claim 9.

## Revendications

1. Garnitures d'embrayage en matériau céramique renforcé par des fibres, contenant des fibres courtes de carbone et dont le mélange de base présente une proportion en poids d'au moins 40 % de carbure de silicium, pouvant être obtenues par un procédé dans lequel
- à la première étape, des fibres courtes de carbone sont mélangées avec des matériaux carbonisables pouvant être assouplis par chauffage, ces mélanges
- sont comprimés dans une deuxième étape en utilisant la pression et la température, en corps qui correspondent dans leurs dimensions aux garnitures souhaitées,
- les corps comprimés sont convertis dans une troisième étape par chauffage en excluant les agents oxydants et en conservant leur forme, en corps de carbone traversés de fibres courtes de carbone qui
- dans une quatrième étape, sont mis en contact avec une masse fondue contenant du silicium sous pression réduite, la masse fondue pénétrant dans les corps poreux et remplissant ces pores, le carbone étant au moins converti partiellement avec le silicium en carbure de silicium,
**caractérisées en ce que** dans la quatrième étape, la quantité de masse fondue est choisie de telle sorte que les pores ne soient pas remplis complètement avec la masse fondue contenant le silicium et **en ce que**
- les pores accessibles restant sont remplis avec une autre masse fondue qui présente une température de fusion d'au moins 550 °C, choisie parmi les masses fondues des métaux aluminium, fer, chrome, nickel, cuivre, molybdène, wolfram, vanadium, niobium, tantale, titane et zircon et les alliages laiton et bronze.

2. Garnitures d'embrayage selon la revendication 1, **caractérisées en ce que** le mélange de base des matériaux céramiques renforcés par des fibres contient 60 % à 90 % de carbure de silicium, 0 % à 30 % de silicium élémentaire et 0 % à 10 % de carbone élémentaire.

3. Garnitures d'embrayage selon la revendication 1, **caractérisées en ce que** le mélange de base des matériaux céramiques renforcés par des fibres contient une proportion en poids de 2 % à 20 % des métaux cités.

4. Garnitures d'embrayage selon la revendication 1, **caractérisées en ce que** la proportion en poids de fibres courtes de carbone dans le matériau céramique est de 20 % à 60 %.

5. Garnitures d'embrayage selon la revendication 1, **caractérisée en ce que** la longueur moyenne des fibres courtes de carbone est de 0,001 mm à 30 mm et leur diamètre est de 4 µm à 12 µm.

6. Procédé de fabrication de garnitures d'embrayage selon la revendication 1, dans lequel dans un mélangeur, un mélange de fibres courtes de carbone et d'un liant est produit, qui est acheminé dans une presse à vis en continu et comprimé au travers d'un bec qui correspond au contour des garnitures souhaitées, la barre étant ensuite découpée, les rouleaux obtenus étant carbonisés et traités avec une masse fondue contenant du silicium, au moins une partie du carbone obtenu lors de la carbonisation étant convertie avec le silicium en carbure de silicium, **caractérisé en ce que** les pores ne sont pas complètement remplis par la masse fondue contenant le silicium et les pores accessibles restants sont remplis par une autre masse fondue de métaux choisis parmi les métaux aluminium, fer, chrome, nickel, cuivre, molybdène, wolfram, vanadium, niobium, tantale, titane et zircon et les alliages laiton et bronze.

7. Procédé selon la revendication 6, **caractérisé en ce que** les métaux sont utilisés en une quantité telle que leur proportion en poids dans la matrice soit de 2 % à 20 %.

8. Procédé selon la revendication 6, **caractérisé en ce que** le procédé est réalisé en continu, dans lequel dans un mélangeur, le mélange de fibres courtes et de liant est produit, qui est acheminé dans une presse à vis en continu et comprimé au travers d'un bec qui correspond au contour des garnitures souhaitées, la barre étant ensuite découpée, les rouleaux obtenus étant carbonisés et ensuite, infiltrés tout d'abord par la masse fondue contenant du silicium, et ensuite, les pores accessibles restants étant remplis avec une autre masse fondue des métaux cités, les fibres courtes de carbone obtenant une orientation préalable perpendiculaire à la surface de frottement des garnitures.

9. Disques d'embrayage comprenant un support métallique ou en matériau céramique renforcé par des fibres, doté des garnitures selon la revendication 1.

10. Systèmes d'embrayage contenant au moins un disque d'embrayage selon la revendication 9.
